# EUROPEAN PATENT APPLICATION

(11) **EP 4 020 362 A1**
(43) Date of publication of application: **29.06.2022**
(21) Application number: 21198493.5
(22) Date of filing: 23.09.2021
(51) Int. Cl.: G06Q 30/02, G06Q 10/02, G06Q 50/30, G06V 20/59, G10L 25/63

(54) **COMPATIBILITY OF RIDE HAILING PASSENGERS**

(30) Priority: 22.12.2020 US 202017131631
(71) Applicant: INTEL Corporation, Santa Clara, CA 95054 (US)
(72) Inventor: TANRIOVER, Cagri, Portland, 97229 (US); FOX, Maik, 76287 Rheinstetten (DE); POHL, Daniel, 91093 Heßdorf (DE)
(74) Representative: 2SPL Patentanwälte PartG mbB

(57) **Abstract**

Disclosed are embodiments for determining compatibility between ride hailing passengers. Depending on a compatibility between two passengers, the two passengers are conditionally assigned to a common vehicle. The compatibility is determined by comparing a set of largest probability states of a first of the two passengers to corresponding states of the second passenger. A compatibility score is then determined based on probabilities that the second passenger shares the set of states with the first passenger.

## Description

### BACKGROUND

Pooling multiple riders in a single ride hailing vehicle provides for substantially increased efficiency when compared to dedicated vehicles for each passenger or passenger group. This efficiency increases based on a level of overlap between routes used to transport each rider to their desired destination. However, pooling of riders can also reduce customer satisfaction, especially when passengers having some incompatibility with each other are allocated to a common vehicle. Thus, improved methods of pooling multiple riders in a single ride hailing vehicle are necessary.

### BRIEF DESCRIPTION OF THE DRAWINGS

The present disclosure is illustrated by way of example and not limitation in the figures of the accompanying drawings, in which like references indicate similar elements and in which:
FIG. 1A is an overview diagram showing how feedback is used, in some embodiments, to determine a compatibility between two users.
FIG. 1B is an overview diagram showing how some of the disclosed embodiments utilize values of binary states and associated probabilities to determine compatibility between two passengers.
FIG. 1C shows combinations of state values, a preference for the indicated combinations, and computation of a preference score.
FIG. 2 shows an example user interface that collects binary state value indications in at least some of the disclosed embodiments.
FIG. 3 shows an example embodiments of a passenger feedback user interface.
FIG. 4 demonstrates use of a collection of state to determine probabilities associated with each state value.
FIG. 5 illustrates a portion of possible combinations of state values.
FIG. 6 is a block diagram showing data flow within a system implementing one or more of the disclosed embodiments.
FIG. 7 is a flowchart of a method implemented in one or more of the disclosed embodiments.
FIG. 8 is an example user interface implemented in one or more of the disclosed embodiments.
FIG. 9 shows example data structures implemented in one or more of the disclosed embodiments.
FIG. 10 is a flowchart of a method of assigning a common vehicle to two passengers, according to a disclosed embodiment.
FIG. 11 illustrates a block diagram of an example machine upon which any one or more of the techniques (e.g., methodologies) discussed herein may perform.

### DETAILED DESCRIPTION

The present disclosure recognizes that substantial customer satisfaction with ride hailing services can be obtained by ensuring that passengers sharing a vehicle have at least a minimum acceptable level of compatibility. For example, a first passenger might feel uncomfortable sharing a ride hailing vehicle at night with three unknown other passengers having different characteristics. Instead, it is likely the first passenger prefers to ride with one or more other passengers sharing the first passenger's characteristics. If this passenger is more frequently paired with other passengers such that their comfort is maximized, they are more likely to continue to use the ride hailing service and recommend it to their friends or associates.

Unfortunately, existing ride hailing services do little to ensure passenger compatibility. In some cases, a passenger can choose to be a single rider, at an increased cost, and thus ensure there are no incompatibilities with other passengers. If a passenger chooses to be pooled with other passengers, they risk being pooled with a disruptive passenger, which can cause tension between the passengers. In some cases, this type of situation can escalate, resulting in an undesirable confrontation between passengers. Thus, the disclosed embodiments recognize a gap in capabilities of existing systems to prevent these types of situations before they are created.

To improve the compatibility between passengers sharing a ride hailing vehicle, at least some of the disclosed embodiments determine a compatibility between potential passengers before assigning those passengers to a common vehicle. The compatibility is based, at least in part, on feedback received on the passengers from fellow passengers and/or drivers of the ride hailing service. Some embodiments include vehicles equipped with one or more sensors that also characterize behavior of ride hailing passengers to generate feedback on passengers without any explicit human involvement in that feedback. This sensor based feedback is particularly helpful in some embodiments that utilize autonomous vehicles and thus include no driver to provide at least a portion of feedback on one or more passengers. Some of the disclosed embodiments also consider passenger preferences, for example, those indicated in a user profile, to determine which passengers are compatible. Thus, the disclosed embodiments provide the advantages of improved compatibility between customers of a ride hailing service. The improved compatibility provide advantages in terms of customer satisfaction, and should increase the probability that the passenger will utilize the ride hailing service at a higher frequency than would otherwise be the case.

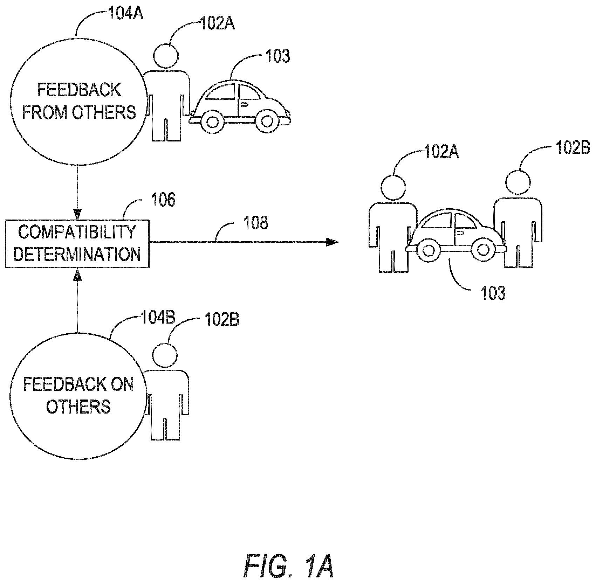

FIG. 1A is an overview diagram showing how feedback is used, in some embodiments, to determine a compatibility between two users. FIG. 1A shows two users, a first user 102A and a second user 102B. Each of the first user 102A and a second user 102B maintains an account within a disclosed MaaS server environment, discussed further below. FIG. 1A shows that the first user 102A is assigned to a vehicle 103. In other words, the first user 102A is a passenger in the vehicle 103. The first user 102A receives feedback 104A from other passengers. The second user 102B provides feedback 104B on other passengers. The feedback 104A and the feedback 104B are used, in some embodiments, in a compatibility determination process 106 to determine a compatibility measurement 108. The compatibility measurement determines whether the second user 102B will be assigned to the vehicle 103 along with the first user 102A.

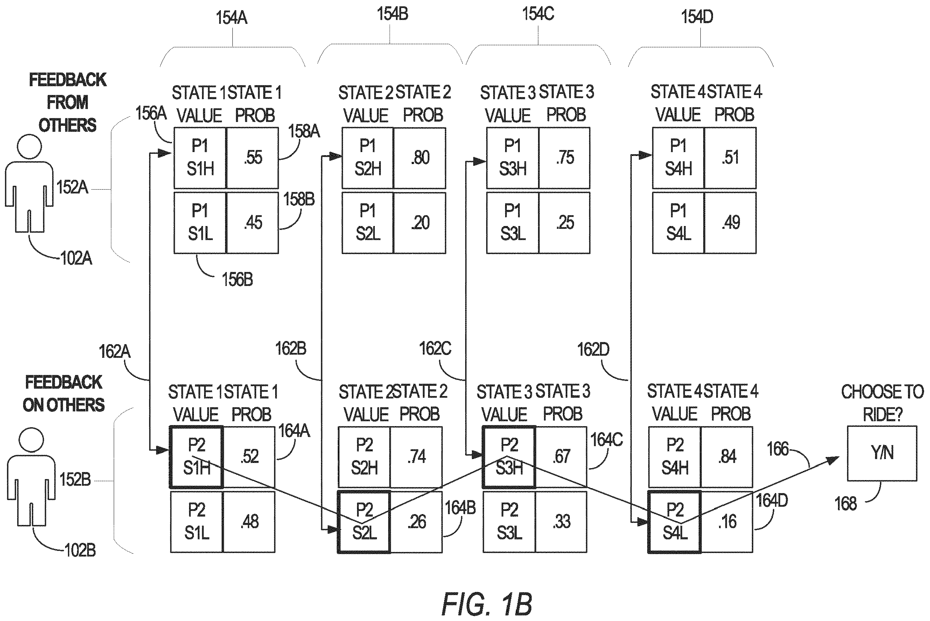

FIG. 1B is an overview diagram showing how some of the disclosed embodiments utilize state values derived from feedback (either feedback received from others or feedback provided on others) and associated probabilities to determine compatibility between two passengers.

A first row 152A represents state values and associated probabilities of the first user 102A (a passenger in the vehicle 103). State values and associated probabilities for the second user 102B are represented by a second row 152B.

Each row defines values and corresponding probabilities of four different states. Information representing a particular state is shown in columns of FIG. 1B. Thus, the four states represented in the example of FIG. 1B are displayed in four columns labeled as column 154A, column 154B, column 154C, and column 154D. The states represented by FIG. 1B represent states of a user. In some embodiments, the states include one or more of a cleanliness, respect for others, safety, use of in-cabin assets, emotional valence, or emotional arousal. A difference between the states of first row 152A and second row 152B is that the state values of first row 152A are based on feedback received on the first user 102A from other passengers. The states of the second row 152B are based on feedback provided by the second user 102B on other passengers. Thus, the states of the first row 152A might be considered to be based on "inbound" feedback, while the states of the second row 152B might be considered to be based on "outbound" feedback.

Each intersection of a row and a column of FIG. 1B represent two possible state values and their associated probabilities. For example, a first state of column 154A can take on first state value 156A or a second state value 156B. Probabilities associated with these values are a first probability 158A and a second probability 158B respectively. Other state values and probabilities are not labeled to preserve figure clarity but can be readily inferred from FIG. 1B. FIG. 1B shows that a probability of state 1 having the first state value 156A is the first probability 158A (e.g..55 in this example). A probability of state 1 having the second state value 156B is a second probability 158B (.45 in this example). Thus, for state values of the first passenger represented by the first row 152A, there is a higher probability that the first passenger's state 1 value is the first state value 156A rather than the second state value 156B. The state values and associated probabilities are arranged in FIG. 1B such that the largest probability state value is positioned above a lower probability state value. Thus, for example, the first passenger has a higher probability of having a value of the second state (represented in column 154B) matching or equivalent to (e.g. equal to) P1S2H (probability is .8) than P1S2L (probability is .2), etc. State values and probabilities are similarly arranged with respect to the second passenger, as shown in the second row 152B.

FIG. 1B also shows equivalencies of state values between the two passengers represented in the first row 152A and second row 152B. For example, equivalency 162A shows that the largest probably state value of the first passenger is the same for the second passenger (e.g. P1S1H = P2S1H). However, for the second state, equivalency 162B shows that the largest probability state values for the two passengers are different, and thus, the P1S2H value is equivalent to the P2S2L value. Equivalency 162C illustrates that the largest probability state value for the first passenger and second passenger are equivalent. Equivalency 162D shows that the largest probably state values for the first and second passenger are different, and thus, a largest probably state value of state 4 is P1S4H, which is equivalent to the P2S4L value.

Some of the disclosed embodiments compute a compatibility score or measurement between the first and second users of FIG. 1A by aggregating probabilities associated with the second user 102B states that match largest probability states of the first user 102A. In the example of FIG. 1B, the aggregation generates a product (e.g. multiplication) of probabilities 164A-D, resulting in an intermediate compatibility score or measurement of 0.0111599 (.52 ^{∗} .26 ^{∗} .67 ^{∗} .16 ^{∗} .77). Other embodiments add the probabilities (sum the probabilities) to aggregate them.

FIG. 1B also shows that the state values of second user 102B matching largest probability state values of the first user 102A identify a combination 166 of state values. At least some of the disclosed embodiments, discussed further below, collect feedback from the second user 102B as to whether the second user 102B prefers to ride with another passenger having the combination 166 of state values. This preference, which is also considered part of feedback 104B, is shown as preference 168. In some embodiments, this preference 168 is one of two binary values, in some cases, a "yes" (e.g. positive preference) or a "no" (e.g. negative preference) answer.

Some embodiments further modify the intermediate compatibility score discussed above by aggregating the intermediate compatibility score with a preference score. The preference score is based on the second user 102B preference 168. Some embodiments determine a percentage with which each preference choice is selected by the second user 102B. Thus, if the second user 102B had a preference for 60% of the possible combinations of state values of the second row 152B (e.g. one of which is the combination 166), the percentage is .6 for a positive preference and .4 for a negative preference in this example. The percentage associated with the preference 168 is then selected. Thus, if preference 168 indicated a positive preference for the combination 166, the percentage .6 or 60% is selected. If preference 168 indicated a negative preference for the combination 166, then the percentage .4 or 40% is selected. This selected percentage is then aggregated with the intermediate compatibility score discussed above, at least in some embodiments.

In addition to the state diagram and the probabilities described above, some embodiments maintain a block list for each passenger, and add another passenger to the block list when the passenger indicates that they specifically request not to be assigned to a common vehicle with the other passenger. In some other embodiments, such feedback on the other passenger instead assigns a weight to any consideration of that passenger. Thus, for example, the compatibility index described above is discounted by a percentage of amount based on prior negative feedback received on the passenger either from the subject passenger or even from other passengers in some embodiments.

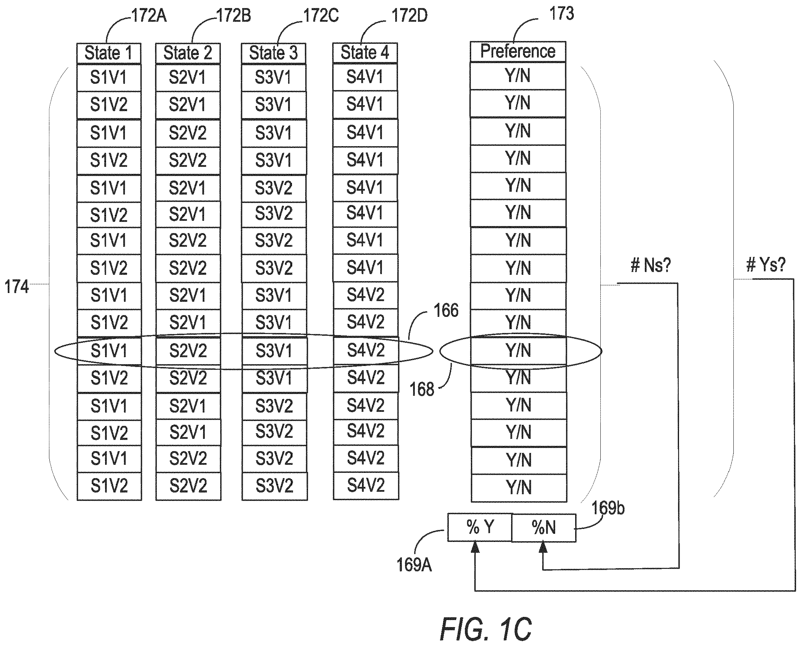

FIG. 1C shows combinations of state values, a preference for the indicated combinations, and computation of a preference score. FIG. 1C shows four different states, denoted state 172A, state 172B, state 172C, and state 172D. In some embodiments, state 172A is analogous to "state 1" represented by column 154A in FIG. 1B. In some embodiments, state 172B is analogous to "state 2" represented by column 154B in FIG. 1B. In some embodiments, state 172C is analogous to "state 3" represented by column 154C in FIG. 1B. In some embodiments, state 172D is analogous to "state 4" represented by column 154D in FIG. 1B.

FIG. 1C illustrates identification of the combination 166 (referenced above in the discussion of FIG. 1B) from the total set of combinations 174. A set of preference choices 173 are shown, with each preference choice corresponding to one combination of state values from combinations 174. A preference choice made by the second user 102B for the combination 166 is shown as preference 168. If the preference 168 indicates a positive preference for the combination 166 of state values, the preference score 169A is, in some embodiments, aggregated with the intermediate compatibility measurement discussed above. If the preference 168 indicates a negative preference for the combination 166, the preference score 169b is, in some embodiments, aggregated with the intermediate compatibility measurement discussed above.

The preference score 169A and/or the preference score169b are determined, in some embodiments as a percentage of the preferences for combinations 174 that match the preference of the combination 166.

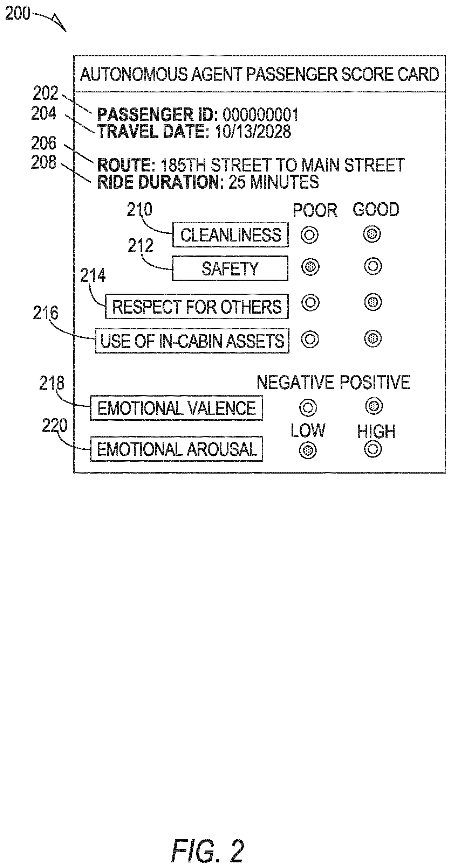

FIG. 2 shows an example user interface that collects binary state value indications in at least some of the disclosed embodiments. Consistent with the description of binary states and their values of FIG. 1B, the user interface 200 shows the collection of values for states that have two possible values. This information is collected, in some embodiments, on a per passenger basis.

The UI 200 displays a unique passenger identifier 202, a date/time indication 204, an indication of a route taken during the trip 206, and a trip duration indication 208. The UI 200 also presents one or more categories for each the passenger can be rated using a simple binary scoring mechanism. Note that the example categories shown in FIG. 2 are simply examples and other categories are implemented in other embodiments.

The example UI 200 further provides an ability to input a cleanliness state value 210, safety state value 212, respect for others state value 214, a use of in-cabin assets state value 216, an emotional valence state value 218, and an emotional arousal state value 220. The example UI 200 provides for entry of a binary indication for each of the cleanliness state value 210, safety state value 212, respect for others state value 214, use of in-cabin assets state value 216, emotional valence state value 218, and emotional arousal state value 220. The example states for which values are collected by the UI 200 are explained below.

Cleanliness refers to any impact the passenger had on the cleanliness of the vehicle itself and not to any personal hygiene attributes of the passenger. Some example behaviors that can affect the cleanliness rating include any trash left behind by the passenger, consumption of food or drink that results in spillage or crumbs being left behind, vomiting in the vehicle, or other behaviors that leave the vehicle in a less clean state as a result of the passenger's ride in the vehicle.

The safety category relates to one or more of whether the passenger properly wore their seat belts, and whether the passenger engaged in dangerous activities such as extending hands and arms out of the window or attempting to open the door before the car comes to a safe stop.

The respect for others category is based on a sound level generated by the passenger. This sound can be generated via a variety of activities, including talking, listening to music, clapping, tapping or banging on any objects (windows/seats/other objects). Respect for others also includes in some embodiments, an indication of whether the passenger is under the influence of drugs and/or alcohol. Respect for others can also be determined based on behavior of other passengers sharing the vehicle with the subject passenger. For example, a verbal warning from another passenger, or a scolding look from another passenger are cues that the subject passenger is being disrespectful to others. In some embodiments, a scoring of a passenger in the respect for others category is performed by an autonomous in-vehicle agent or in-vehicle sensor. The agent can make an assessment on this by measuring the loudness of a passenger while talking and making noise (e.g. banging on the window/seats, clapping loudly, listening to loud music etc.), which can be disturbing to others.

The use of in-cabin assets category reflects whether the passenger inflicted physical damage to any part of the vehicle's in-cabin assets (e.g. denting upholstery, scratching the window, drawing/painting on various surfaces, leaving stickers around, leaving trash behind, etc.). In some embodiments, this category also indicates whether any complementary items provided as part of the service are consumed as intended (e.g. putting all the available water bottles in a bag, taking one bite from available snacks and dropping them etc.).

Some embodiments also evaluate an emotional state of passengers. In some embodiments, an in-vehicle autonomous agent performs this evaluation based on input from one or more sensors positioned within the vehicle cabin. To provide for sufficient accuracy in quantifying emotional state, the disclosed embodiments utilize valence and arousal detection, and avoid use of categories such as " "very angry", "calm", "a little sad", "frustrated" etc.

Some embodiments score a passenger's emotional valence. Emotion valence indicates whether the passenger is experiencing a positive or a negative emotion. For example, emotions such as angry, bored, frustrated are categorized as negative valence while excited, happy, relaxed fall under positive valence. Some embodiments score a passenger's emotional arousal. Emotional arousal refers to an intensity of an emotional valence. For example, a passenger may be very angry or slightly angry. To simplify this assessment, some embodiments provide for a binary indication of emotional arousal (e.g. low or high).

While FIG. 2 illustrates collection of passenger feedback via a user interface, the embodiment of FIG. 2 requires human input. Some embodiments collect passenger feedback without requiring human input. As discussed above, some vehicles are configured with autonomous in-vehicle agents, that are able to assess one or more states of one or more passengers riding in the vehicle. For example, these in-vehicle autonomous agents use facial recognition technology, in some embodiments, to identify a passenger and determine an estimate on their emotional state. Some embodiments of in-vehicle autonomous agents determine user/passenger states based on sound detected via a microphone. For example, some in-vehicle autonomous agents analyze the sound to determine whether the user/passenger has positive or negative emotional valance, and/or high or low emotional arousal.

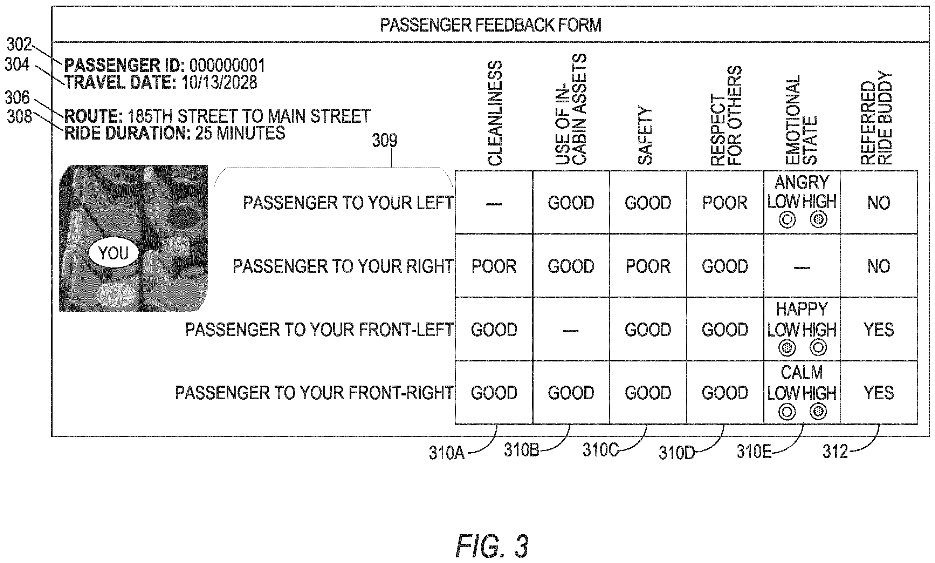

FIG. 3 shows an example embodiments of a passenger feedback user interface 300. In some embodiments, fellow passengers are presented with a user interface analogous to the example passenger feedback user interface 300. Similar to the UI 200, the passenger feedback user interface 300 indicates a passenger identifier 302, travel date 304, travel route 306, and a ride duration 308.

The passenger feedback user interface 300 provides a description 309 of the passenger for which feedback is being requested. Some embodiments provide a description indicating a seating arrangement of the vehicle when the passenger was present, so as to assist the passenger being solicited for feedback as to which passenger is referenced by the passenger feedback user interface 300. As humans tend to be more cooperative when presented with binary score options, some embodiments of the passenger feedback user interface 300 present the fellow passenger(s) with binary scoring options for each of the solicited categories (e.g. score the passenger as either good/bad or low/high).

FIG. 3 shows the passenger feedback user interface 300 collecting feedback on four passengers across five categories, labeled as category 310A, category 310B, category 310C, category 310D, and category 310E. In some embodiments, categories referenced in the passenger feedback user interface 300 overlap, at least to some degree, with categories available in the UI 200, discussed above. Some categories vary between the two user interfaces. For example, when categorizing an emotional state of a fellow passenger, a passenger viewing the passenger feedback user interface 300 is presented, in some embodiments, with a list of emotions such as angry, happy, sad, relaxed from which to select, whereas the UI 200 provides only two selections. As humans are generally more capable of discerning between a larger variety of emotions, UI 300 leverages this ability to obtain improved insight into a passenger's emotional state. However, these more granularly determined states are converted or mapped, in at least some embodiments, into one of two values associated with emotional valence (as described earlier).

In some other embodiments, the UI 300 also provides a binary choice for characterizing a fellow passenger's intensity of emotion (e.g. high or low). In terms of the intensity of a listed emotion, the passenger can simply select either high or low. While emotional state assessment is subjective, capturing this information from multiple passengers is likely to improve the reliability of this assessment over time where predominant trends are likely to emerge, which is relevant to our system. The passenger also has the option of not providing scores in some of the categories as indicated by hyphens in our example.

In some embodiments of the UI 300, as illustrated, a right most column 312 receives input indicating whether the passenger interacting with the UI 300 would choose to travel again with each of the other passengers that shared the ride. In some embodiments, when a passenger indicates an unwillingness to travel with another passenger (e.g., by selecting "NO"), the two passengers are not assigned to a common vehicle in the future. In some embodiments, the input received from a user for the data shown in column 312 provides the preference choices 173 discussed above with respect to FIG. 1C.

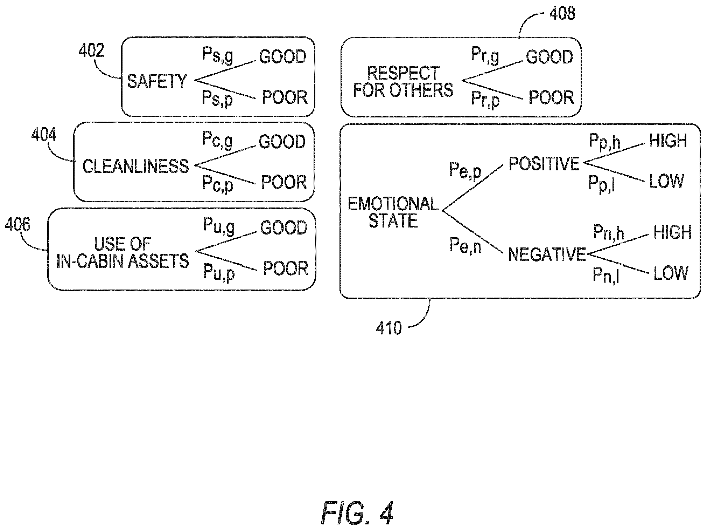

**Fehler! Verweisquelle konnte nicht gefunden werden.** demonstrates how collection of state values, for example, as described above with respect to FIGs. 2 and 3, are used to determine probabilities associated with each state value. As discussed above, some embodiments make use of a plurality of binary states, each of which has two possible values. Associated with each of the possible values is a probability that the state has the associated value. Some of the disclosed embodiments tabulate or otherwise compute a probability that a passenger has a particular state value based on feedback received on that passenger. Thus, for example, if three out of ten feedbacks on a first passenger indicates they have a first value of a first state, then the probability that the first passenger has the first value for the first state is 0.3 (e.g. 3/10), and a probability that the first passenger has a second value of the second state is 0.7 (e.g. 7/10). FIG. 4 demonstrates that each of a plurality of states can assume one of two possible values. This includes a safety state 402, cleanliness state 404, a use of in-cabin assets state 406, respect for others state 408, and an emotional state 410.

In some embodiments, the emotional state 410 has one of four possible values, the four possible values representing different combinations of binary states for emotional valence and emotional arousal.

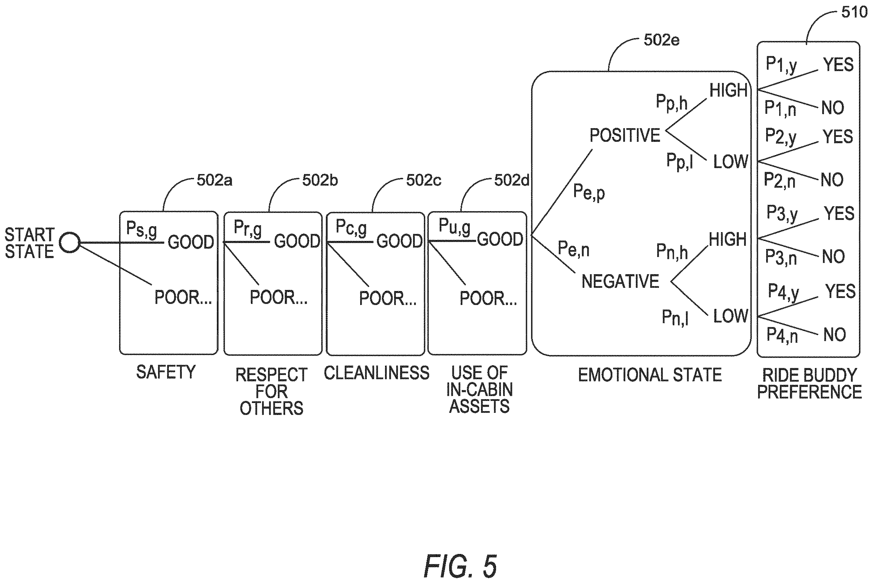

FIG. 5 illustrates a portion of possible combinations of state values. The states are shown as states 502A-E. FIG. 5 also illustrates how each combination of values in the plurality of categories or states generally maps to an indication 510 from a passenger as to whether they are willing to share a ride with an individual having that combination of state values. Ordering of each category may vary and will not affect the outcome since the state diagram will cover all the possible transitions and the branch probabilities will be updated independently. The ride companion preference (highlighted as orange) is the outcome and therefore it makes sense to place it at the end of the state diagram as shown.

FIG. 5 shows only a portion of possible state transitions implemented by some of the disclosed embodiments. For example, some embodiments include at least 128 state variations or transitions. For simplicity of illustration, FIG. 5 shows a single path from a first state on the left to a right most column showing preferences of fellow riders of the subject passenger.

Some embodiments update each of the probabilities associated with each state as additional state information is collected from in-vehicle autonomous agents and/or fellow passengers.

As discussed above with respect to FIG. 1B, some embodiments rely on values of a plurality of binary states of two passengers to determine a compatibility between the two passengers. As discussed above, in some embodiments, a first set of state values of the first passenger are determined. The first set of state values are those values having a largest probability of being state values of each of their respective states. Thus, for example, as discussed above with respect to FIG. 1B, the first set of state values are analogous to the state values shown as P1S1H, P1S2H, P1S3H, P1S4H, and P1S5H, since those values are the largest probability state values of their respective states. Next, some embodiments determine probabilities associated with equivalent second passenger state values. For example, as discussed above with respect to FIG. 1B, equivalences 162A-D are shown between the largest probably state values illustrated in a first row 152A (of a first passenger) of FIG. 1B, with state values illustrated in a second row 152B of FIG. 1B (state values of a second passenger). The probabilities 164A-D associated with the equivalent state values are then aggregated (e.g. multiplied or added) to generate a compatibility indicator or score (e.g. add the probabilities in some embodiments).

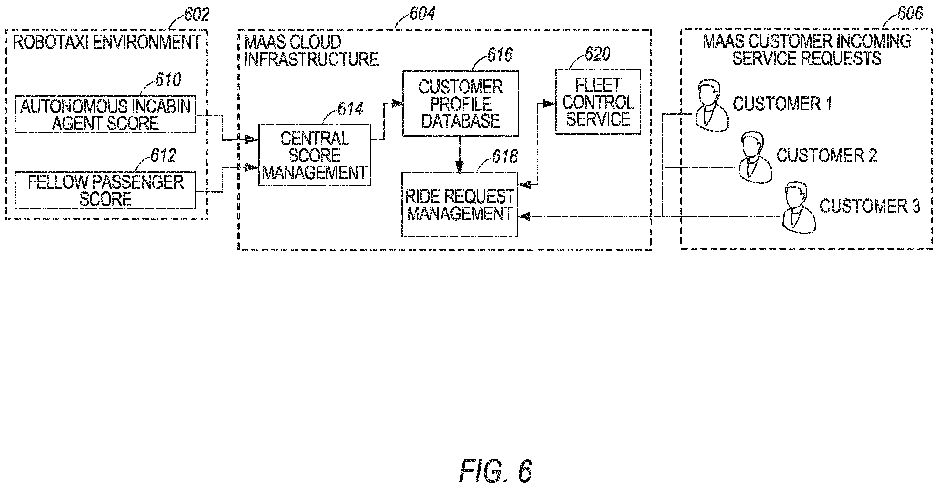

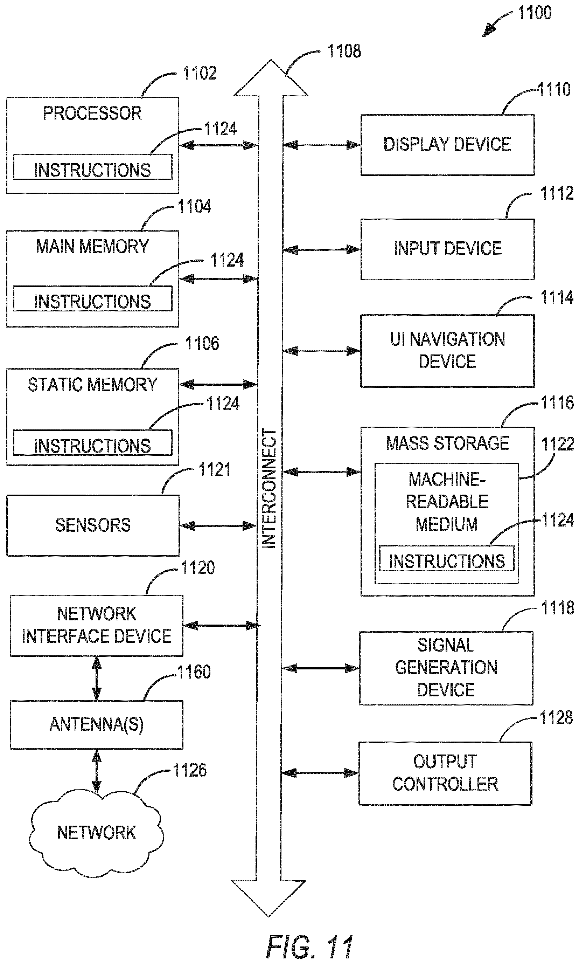

FIG. 6 is a block diagram showing data flow within a system implementing one or more of the disclosed embodiments. FIG. 6 shows a vehicle environment 602, a mobility as a service (MaaS) server environment 604 (e.g. cloud based environment), and a customer environment 606. In some embodiments, the MaaS server environment 604 implements the machine 1100, discussed below with respect to FIG. 11.

The vehicle environment 602 includes two sources of data. A first data source is an in-vehicle autonomous agent 610. The in-vehicle autonomous agent 610 includes one or more sensors to sense the vehicle environment. This one or more sensors includes, in various embodiments, one or more imaging sensors, microphones, vibration sensors, heartbeat sensors, or other sensors. Based on input from the one or more sensors, the in-vehicle autonomous agent 610 characterizes one or more states of a passenger riding within the vehicle. For example, in some embodiments, the in-vehicle autonomous agent 610 uses facial recognition or facial analyzing technology to detect a mood of the passenger, and derives a probable state of the passenger based on analysis of the image. Similarly, some embodiments of the in-vehicle autonomous agent 610 apply a threshold to a sound level detected from the passenger. Passengers generating a relatively large amount of sound (e.g., sound level above a predefined threshold) are assigned a predefined state value in some embodiments. Thus, in some embodiments, the in-vehicle autonomous agent 610 determines a state value for one or more states of a passenger during or after the passenger completes a ride in the vehicle. The vehicle environment 602 also shows state information provided by fellow passengers 612. As discussed above, some embodiments display one or more user interfaces to passengers, with the user interface(s) requesting feedback on other passengers in the vehicle. The user interface(s) are configured to receive input indicating values of one or more states. In some cases, the input indicates one of two state values. In other embodiments, as illustrated above with respect to, for example, FIG. 3, the user interface(s) are configured to allow input indicating a fellow passenger has one of several state values (e.g. more than two), such as one of four, five, or six state values. Thus, some embodiments support non-binary states that have more than two possible values.

The state information of a passenger is provided, by one or more of the in-vehicle autonomous agent 610 and/or one or more fellow passengers 612, to the MaaS server environment 604. The MaaS server environment 604 uses the state information to determine preference and compatibility measurements for passengers. In some embodiments, the state information is received by a central score management system 614. This preference and compatibility measurement information is stored in a customer profile database (CPD) 616. When a request for a ride is received from a potential passenger, the request is received, in some embodiments, by a Ride Request Management (RRM) 618 component. The RRM 618 checks availability of vehicles along a requested route and determines whether each of the available vehicles includes passengers compatible with the potential passenger requesting the ride. Assuming acceptable compatibility between the requesting passenger and available vehicles is identified, the potential passenger is assigned a vehicle. The vehicle is then instructed to proceed to the location of the passenger by a fleet control service 620.

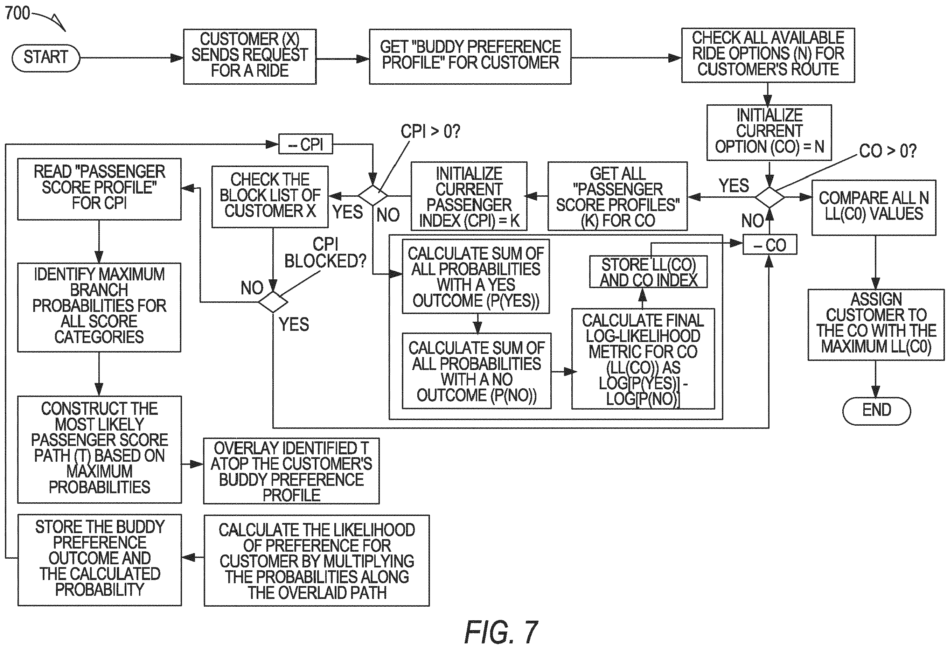

FIG. 7 is a flowchart of a method implemented in one or more of the disclosed embodiments. In some embodiments, one or more of the functions discussed below with respect to method 700 and FIG. 7 are performed by hardware processing circuitry (e.g. hardware processor 1102 discussed below). For example, in some embodiments, instructions (e.g. instructions 1124 discussed below) stored in a memory (e.g. 1104 and/or 1106 discussed below) configure the hardware processing circuitry to perform one or more of the functions and/or operations discussed below with respect to method 700 and/or FIG. 7. In some embodiments, the method 700 is performed by the central score management system 614.

FIG. 7 shows that when a customer sends a ride request, depending on the route and the availability of vehicles in a fleet, there may be options available. Some embodiments evaluate available vehicle options as well as passengers assigned in those vehicles to identify a vehicle option having a best compatibility between passengers assigned to the vehicle and the passenger requesting the ride.

As shown in FIG. 7, after calculating probabilities for the passengers in an available vehicle (or ride), a set of likelihood metrics are calculated for both positive (e.g. 'YES') and negative (e.g. 'NO') outcomes. As illustrated, some embodiments utilize a log function and a difference between a sum of the probabilities p(YES) and p(NO). For any set of probabilities, a likelihood metric extends from negative infinity to positive infinity, where a higher number generally indicates a higher degree of passenger compatibility. Since some embodiments add probabilities to form a compatibility measure, the compatibility score can be greater than one (1). As this compatibility measurement is not applied as a probability, values greater than one are not problematic. Some embodiments normalize compatibility scores before comparing them by averaging the probabilities instead of summing them.

Some embodiments further implement a block list capability and provide an option for a first passenger to add a second passenger to their block list. In some embodiments, once the first passenger is identified on the second passenger's block list, the two passengers will not be assigned a common vehicle. In some embodiments, feedback indicating the first passenger does not wish to ride with the second passenger indicates a future discount to any compatibility score generated between the two passengers (e.g. a discount rate of 0.5). Thus, the two passengers may still be paired in some situations where no better options are available, even with the applied discount to the compatibility.

Some embodiments implement additional ride/vehicle selection criterion for passengers based on a number of previous trips completed by the passenger. For example, in some embodiments, ride/vehicle options having a larger number of empty seats are given higher priority to passengers with less than a predefined threshold number of completed trips. Thus, in an environment two passengers, a first passenger having a number of rides lower than the predefined threshold and a second passenger having a number of previous rides higher than the predefined threshold, and two vehicle options, a first vehicle having a first number of empty seats and the second vehicle having a second higher number of vehicle seats, some embodiments assign the first passenger to the first vehicle and the second passenger to the second vehicle, when other selection parameters are equal or relatively equal. A number of empty vehicle seats is also given increased priority in a vehicle selection process when compatibility between passengers is below a threshold. The logic being that a passenger matched with a somewhat incompatible fellow passenger is as assuaged by the greater room within the vehicle afforded by the empty seats.

One additional criterion could be to use the load balancing between available ride options for a new passenger. For example, if there are two available ride options where one car has 3 passengers while another has just one, it will make sense to allocate the new passenger to the less crowded car on the same route if the passenger compatibility metrics are more or less comparable. In some cases, such allocation may even be preferred by passengers as they may prefer to travel in a less crowded car even though they are not completely happy with their fellow travelers (this is likely to be true especially for short rides where time matters the most)

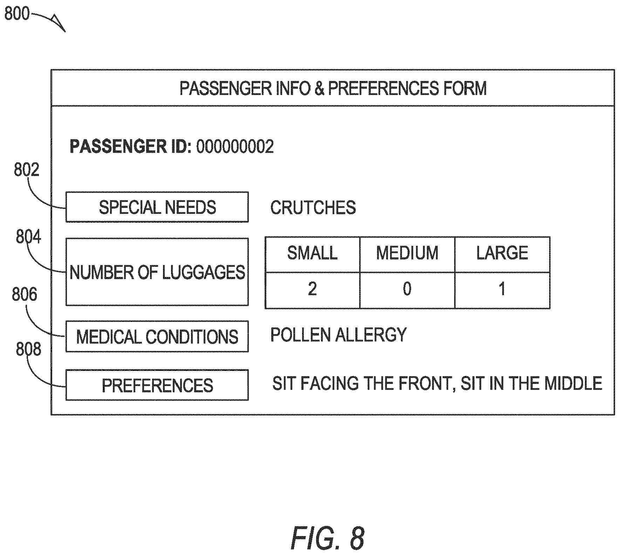

FIG. 8 is an example user interface (UI) 800 implemented in one or more of the disclosed embodiments. The UI 800 provides an ability to obtain, from a passenger, additional preferences. The additional preferences are utilized, in some embodiments, when determining a vehicle to assign to the passenger. As shown in FIG. 8, additional preferences include, in various embodiments, indicating any special needs 802 of the passenger that may require selection of a subset of vehicles that are available to service the passenger. For example, some passengers with special needs require a vehicle having an increased amount of available space relative to passengers without those same special needs (e.g. crutches or a wheelchair may require a vehicle with more room, e.g. in the trunk).

The UI 800 also illustrates an ability to indicate an amount of luggage 804 the passenger intends to bring on a ride. When the passengers are accompanied by additional luggage with them onboard, knowing the number and size of such cargo can also help with the advance planning such that the passenger's needs are properly accommodated, by ensuring a vehicle able to meet their needs is selected for their travel. The UI 800 also provides an ability to indicate any medical conditions 806 the passenger has. Knowing a medical condition of a passenger can be helpful in improving the ride experience in an autonomous vehicle. For example, if a passenger has a pollen allergy, opening of vehicle windows by passengers is inhibited in some embodiments. Some embodiments also define settings for a vehicle air conditioning system based on any indicated medical conditions (e.g. a pollen filter in an air conditioning system can be of assistance with pollen allergies). The UI 800 also illustrates an ability to collect additional preferences 808, such as a preferred seating position within a vehicle (facing front, front seat, rear seat, rear facing seat, etc.). Some passengers prefer to be facing the front when riding. Some embodiments select a vehicle for a passenger based on the additional preferences 808. For example, a passenger that prefers not to be located in a rear facing seat is assigned a vehicle with available forward facing seats instead of another vehicle, that is more preferable in other respects, based on the preference information.

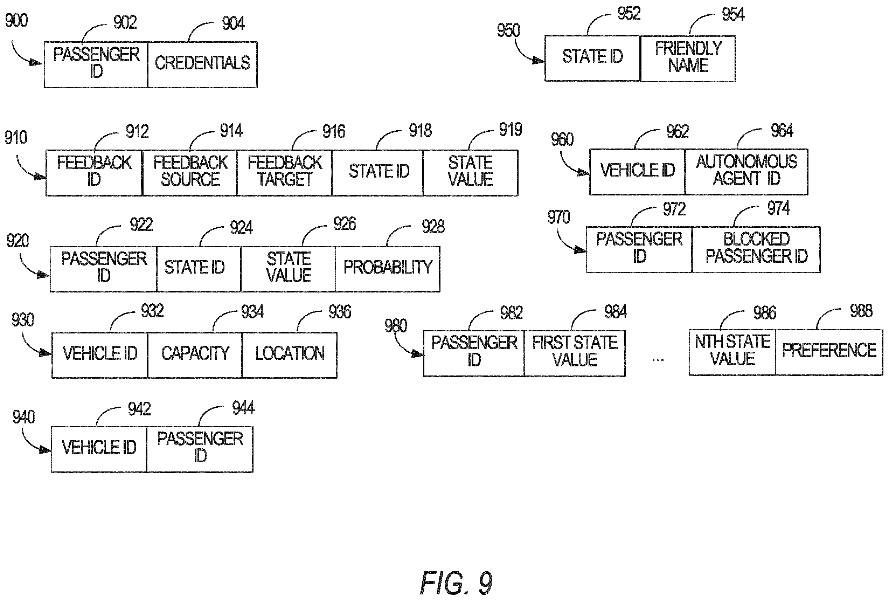

FIG. 9 shows example data structures implemented in some embodiments. While the data structures of FIG. 9 are illustrated and discussed as relational database tables, the disclosed embodiments utilize a variety of data architectures and are not limited to the examples of FIG. 9.

FIG. 9 shows a passenger table 900, feedback table 910, passenger state value table 920, vehicle table 930, rider table 940, state name table 950, an autonomous agent table 960, a block table 970, and a passenger preference table 980. Any one or more of the disclosed data structures discussed below with respect to FIG. 9 is considered rideshare information, although rideshare information is not limited to these examples. In general, rideshare information is information derived from feedback received by and from a passenger of a ride sharing service. Rideshare information also includes, in other embodiments, other information relating to a ridesharing service. For example, in some embodiments, passengers indicate their preferences with respect to vehicles, other passengers, luggage, or other attributes of their ride share experience. This is also considered ridesharing information in some embodiments.

The passenger table 900 includes a passenger identifier field 902 and a credentials field 904. The passenger identifier field 902 uniquely identifies a passenger, user, and/or account of at least some of the disclosed embodiments. The credentials field 904 stores information used to validate a login or the establishment of a session for the identified passenger (e.g. account name, password, etc.).

The feedback table 910 includes a feedback identifier field 912, feedback source field 914, feedback target field 916, state identifier field 918, and a state value field 919. Each row of the feedback table 910 identifies a single feedback (identified by feedback identifier field 912) on a single state (identified by the state identifier field 918) of a single passenger or user (identified by the feedback target field 916). The feedback source field 914 identifies another passenger providing the feedback, or an autonomous agent providing the feedback. Thus, for example, if a fellow passenger indicated a passenger had poor cleanliness, the state identifier field 918 would identify the cleanliness state, and the state value field 919 would identify the poor value for the cleanliness state, while the feedback target field 916 would identify the passenger with poor cleanliness.

As discussed above, some embodiments determine state values of a user based on feedback from others about the user. (e.g. feedback 104A of FIG. 1A). Some of these embodiments determine feedback about the user by querying data analogous to one or more fields of the feedback table 910. For example, some of these embodiments query the feedback target field 916 to identify feedback provided about a particular user/passenger, and can thus develop data analogous to the feedback 104A discussed with respect to FIG. 1A, and the state values and probabilities of first row 152A discussed above with respect to FIG. 1B. Some embodiments also determine state values of a user based on feedback the user provides about other users. Thus, some of these embodiments also query data analogous to one or more fields of the feedback table 910, at least in some embodiments. For example, by querying the feedback source field 914, these embodiments identify feedback provided by a particular user on other users, and can thus develop data reflecting the feedback 104B discussed with respect to FIG. 1A, and the state values and probabilities indicated by the second row 152B discussed above with respect to FIG. 1B.

The passenger state value table 920 includes a passenger identifier field 922, state identifier field 924, state value field 926, and probability field 928. The passenger identifier field 922 uniquely identifies a passenger/user/account in some of the disclosed embodiments, and is cross referenceable with other passenger identifier field discussed with respect to FIG. 9. The state identifier field 924 identifies a particular binary state (e.g. a state representing cleanliness, respect for others, safety, use of in-cabin assets, an emotional state, or other states). The probability field 928 represents a probability that the identified passenger (e.g. via passenger identifier field 922) will have the state value (e.g. identified in state value field 926) of the identified state (e.g. identified via the state identifier field 924). In some embodiments, a value of the probability field 928 is determined based on information in the feedback table 910. As discussed above, in some embodiments, a percentage of feedback indicating a passenger has a particular value of a particular state (e.g. poor cleanliness) represents a probability that the passenger has that state value (e.g. 20% feedback indicates passenger has poor cleanliness, then probability of poor cleanliness is 20% and probability of good cleanliness of that passenger is 80%).

The vehicle table 930 includes a vehicle identifier field 932, capacity field 934, and location field 936. The vehicle identifier field 932 uniquely identifies a vehicle and is cross referenceable with other vehicle identifier fields discussed with respect to FIG. 9. The capacity field 934 indicates a number of passengers the vehicle can carry at any one time. The location field 936 indicates a location of the vehicle.

The rider table 940 indicates which passengers are assigned to which vehicles, and includes a vehicle identifier field 942 and passenger identifier field 944. The vehicle identifier field 942 uniquely identifies a vehicle and is cross referenceable with other vehicle identifier fields discussed with respect to FIG. 9. The passenger identifier field 944 uniquely identifies a passenger assigned to the vehicle and is cross referenceable with other passenger identifier fields discussed with respect to FIG. 9.

The state name table 950 includes a state identifier field 952 and a friendly name field 954. The state identifier field 952 uniquely identifies a state (e.g. cleanliness, respect for others) and the friendly name field 954 stores a human readable name for the state (e.g. "cleanliness", "respect for others").

The autonomous agent table 960 includes a vehicle identifier field 962 and an autonomous agent identifier field 964. The vehicle identifier field 962 uniquely identifies a vehicle and is cross referenceable with other vehicle identifier fields discussed with respect to FIG. 9. The autonomous agent identifier field 964 uniquely identifies an autonomous agent within the vehicle. A value of an autonomous agent identifier field 964 is used, in some embodiments, to identify an autonomous agent providing feedback (e.g. in the feedback source field 914).

The block table 970 includes a passenger identifier field 972, and a blocked passenger identifier field 974. The passenger identifier field 972 and blocked passenger identifier field 974 each uniquely identify a particular passenger, and each are cross referenceable with other passenger identifier fields discussed with respect to FIG. 9. The block table 970 implements, in some embodiments a block list. As discussed above, some embodiments accept input from a passenger indicating they do not wish to travel with a second passenger. Thus, this information is represented, in some embodiments, by data analogous to the block table 970.

Each row of the passenger preference table 980 defines combinations of state values and a preference for a particular passenger as whether the particular passenger prefers to ride with another passenger having the state values defined by the particular row of the passenger preference table 980. The passenger identifier field 982 identifies a particular passenger and is cross referenceable with other passenger identifier fields discussed with respect to FIG. 9. The first state value field 984 defines a particular value of a first state (e.g. state 1 in column 154A of FIG. 1B). The passenger preference table 980 includes a variable number of fields depending on how many states are implemented by a particular embodiments. Two state value fields are shown with respect to the passenger preference table 980 but any number of state value fields are contemplated. A second or Nth state value field 986 stores a value of a Nth state of a passenger. The preference field 988 indicates a preference of the passenger identified by the passenger identifier field 982 for riding with another passenger having a combination of state values as represented by the state value fields 984 and 986 (in the illustrated example). In some embodiments, each row of the passenger preference table 980 stores combinations of state values, as illustrated above for example with respect to FIG. 1C and combinations 174. Each combination of state values is repeated, at least in some embodiments, for each passenger registered or managed by a particular embodiment. In some embodiments, only combinations which have received explicit preference information from the passenger are stored in the passenger preference table 980.

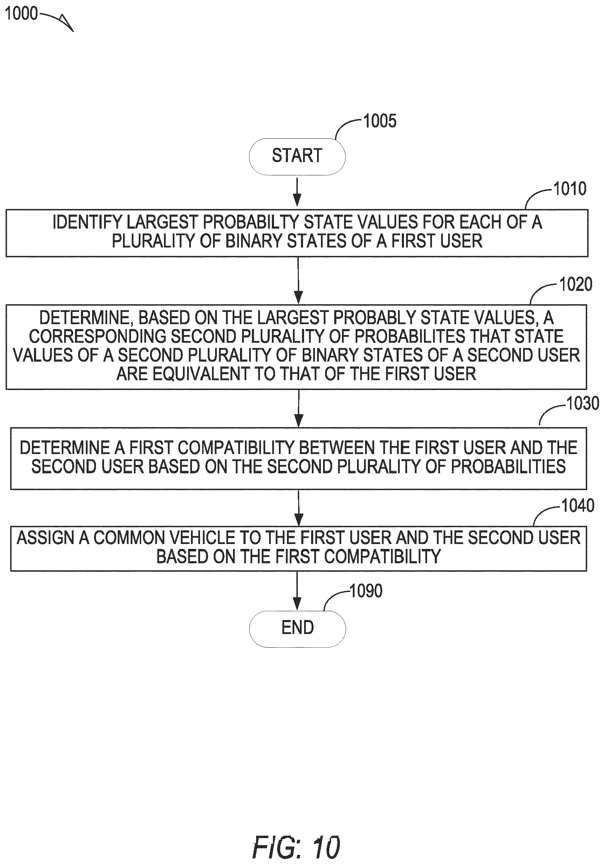

FIG. 10 is a flowchart of an example method for assigning a common vehicle to two passengers. In some embodiments, one or more of the functions discussed below with respect to method 1000 and FIG. 10 are performed by hardware processing circuitry (e.g. hardware processor 1102 discussed below). For example, in some embodiments, instructions (e.g. instructions 1124 discussed below) stored in a memory (e.g. 1104 and/or 1106 discussed below) configure the hardware processing circuitry to perform one or more of the functions and/or operations discussed below with respect to FIG. 10.

After start operation 1005, method 1000 moves to operation 1010. In operation 1010, largest probability state values are identified for each of a plurality of binary states of a first user or passenger. In some embodiments, the first user or passenger is already assigned to a first vehicle (e.g. already a passenger in the first vehicle).

As discussed above with respect to FIG. 1B, a first user or passenger's values of binary states are illustrated in the first row 152A, with the largest probably state values (e.g. P1S1H) above the lower probably state values (e.g. P1S1L) in the row. Thus, some embodiments of operation 1010 determine, for each possible state value of a plurality of states, a probability that the state has the possible state value, each of the plurality of states indicating feedback provided on a first user by other users, and identify, for each of the plurality of states, which of the state's values has a largest probability;

The binary states, in various embodiments, represent different characteristics, moods, or observations of the first user or passenger. Examples of characteristics, moods, or observations represented by binary states in some of the disclosed embodiments are provided above. For example, the plurality of binary states represent, in some embodiments, one or more of a cleanliness of the user (e.g. poor or good are two possible values of a binary state representing cleanliness), safety of the user/passenger (e.g. poor or good are two possible values of a binary state representing safety), respect for others (poor or good are two possible values of a binary state representing respect for others, use of in-cabin assets (poor or good are two possible values of a binary state representing use of in-cabin assets. An emotional valence of the user/passenger is represented, in some embodiments, by a binary state (e.g. negative emotional valence and positive emotional valence are two possible values of a binary state representing emotional valence in some embodiments). Emotional arousal of the user/passenger is represented, in some embodiments, by a binary state (e.g. low emotional arousal and high emotional arousal are two possible binary states represented by a binary state in at least some embodiments). In some embodiments, the first plurality of binary state values are derived from feedback provided on the first user by other users (e.g. inbound feedback) of a MaaS server environment (e.g. 604). For example, in some embodiments, the first plurality of binary state values are derived from feedback received on the first user via a user interface analogous to the UI 200 or the UI 300, discussed above with respect to FIG. 2 and 3 respectively.

As discussed above, probabilities associated with state values are determined, in some embodiments, as a percentage of feedback, either from fellow passengers or from one or more automated in-vehicle agents, indicates the state value. Thus, as discussed above, if 20% of feedback on the first user/passenger indicates the user has good cleanliness, then a probability associated with good cleanliness (a first state value of the binary state representing cleanliness) is 20% and a probability of poor cleanliness (a second value of the binary state representing cleanliness) is 80%. In some embodiments, feedback used to determine probabilities is obtained from data analogous to the feedback table 910, discussed above with respect to FIG. 9. Probabilities on state values of the first user or passenger are determined, in some aspects, such that data analogous to that discussed above with respect to the passenger state value table 920 is generated based on data analogous to the feedback table 910. In some embodiments, feedback from a passenger is selected from more than two possible states. For example, as discussed above with respect to FIG. 3, some embodiments collect input on an emotional state that is selected from one of four or five choices. In some of these embodiments, operation 1010 maps the user selections into one of two choices, such that the emotional state is also a binary state when used for passenger compatibility determination.

Thus, in some embodiments, operation 1010 includes receiving a plurality of inputs from a plurality of users, each of the plurality of inputs selecting a state value of one of the plurality of binary states of the first user or passenger, determining individual probabilities that the first user has each individual state value of the plurality of binary states based on the inputs

(e.g. each of the state values represented in the first row 152A of FIG. 1B), and determining of the largest probability state values of each of the plurality of binary states is based on the determined individual probabilities.

In operation 1020, a second plurality of probabilities are identified. Each of the second plurality of probabilities is a probability that a state value of a second user or passenger is equivalent to the largest probably state value (for the respective state) of the first passenger or user. Thus, method 1000 seeks to determine whether the second passenger is compatible with the first user or passenger, such that the second user can be assigned to a vehicle that is already assigned to the first user.

Thus, as discussed above for example with respect to FIG. 1B, if the first user or passenger's state values are represented by the first row 152A, the second user or passenger's state values can be represented by the second row 152B. Operation 1020 identifies equivalencies between the largest probability state values of the first row 152A and state values in the second row 152B. (e.g., one or more equivalencies analogous to equivalences 162A-D). Probabilities associated with the equivalent state values are identified in operation 1020. Referring back to the example of FIG. 1B, operation 1020 would identifies the probabilities analogous to those labeled 164A-D in operation 1020. In some embodiments, while the state values examined in operation 1010 are based on feedback received about the first user from other users, the state values examined in operation 1020 are based on feedback provided by the second user about other users (e.g. outbound feedback). For example, in some embodiments, the state values examiner in operation 1010 are derived from input provided by the second user to a user interface analogous to one or more of the UI 200 of FIG. 2, or the UI 300, discussed above with respect to FIG. 3

In operation 1030, a first compatibility is determined between the first user or passenger and the second user or passenger. As discussed above, some embodiments aggregate the second plurality of probabilities of operation 1020. Aggregation includes summing the probabilities in some embodiments or multiplying the second plurality of probabilities in other embodiments. Some embodiments further aggregate a preference score with the second plurality of probabilities. The preference score is based on the second user's indicated preference for riding with a passenger having the largest probability state values identified in operation 1010. (e.g. per discussion above of preference score in FIG. 1B and/or 1C). In some embodiments, the preference score is obtained based on data analogous to that described above with respect to the passenger preference table 980.

This first compatibility is compared, in some embodiments, to second, third, and/or fourth compatibilities with second, third, or fourth passengers. For example, while operations 1020 and 1030 reference a second user or passenger, some embodiments of method 1000 perform operations 1020 and 1030 for a plurality of different passengers (other than the first user or passenger). The compatibilities of the first passenger with this plurality of different passengers is then compared, for example, by identifying those other passengers with the largest (best) compatibility score. In some embodiments, the other passengers for which a compatibility with the first passenger/user is determined are first identified based on their existing vehicle assignments and locations of those vehicles. For example, the first passenger is requesting a ride hailing service to a destination in some embodiments. Some embodiments then identify one or more vehicles in a position to efficiently pick up the first passenger and transport them to their destination. This identification examines, in various embodiments, a location of the vehicle, destinations of passengers already assigned to the vehicle, a planned route of the vehicle, and/or other parameters. Some embodiments also determine whether passenger already assigned to the identified vehicles are included on the first passenger's block list, if implemented. (e.g. via block table 970 in some embodiments). If, after searching the block list, it is determined that a vehicle includes a passenger on the first passenger's block list (or vice-versa), that vehicle is not considered for transportation of the first passenger in some embodiments.

In some embodiments, identification of a possible vehicle for the first passenger/user is based on preference information provided by the first passenger/user. For example, as discussed above with respect to FIG. 8, some examples of preference information include indications of any special needs of the passenger, luggage carried with the passenger, medical conditions, or seating preferences of the passenger.

In operation 1040, assignment of the first passenger to one of these identified vehicles(s) is then at least partly based on a compatibility of the first passenger with one or more passengers assigned to the vehicle. In some aspects, multiple passengers are already assigned to a vehicle. Before assigning the second passenger to the vehicle, a compatibility between the first passenger and each of the other passengers already assigned to the vehicle is performed. In some embodiments, each of the compatibilities is evaluated against a criterion to determine if the first passenger can be assigned to the vehicle. In some embodiments, the criterion compares the compatibility to a minimum threshold, and assignment to the vehicle only can occur if the compatibility exceeds the minimum threshold for each of the other passengers already assigned to the vehicle. In some other embodiments, a criterion is collectively applied to the compatibility scores of the first passenger to each of the other passengers. In some of these embodiments, an average, median, or mode of the compatibilities must meet a second minimum threshold before the first passenger can be assigned to the vehicle.

In some embodiments, no vehicles having passengers/users compatible with the first user are identified. For example, under certain circumstances, there is one or more vehicles within an acceptable distance of the first passenger that could provide a travel service to the first passenger. However, in this example conditional scenario, the first passenger is incompatible with one or more passengers/users already assigned to these vehicles. Thus, in some cases, the disclosed embodiments identify a vehicle that is not carrying any other passengers, and assigns that vehicle to transport the first user. In some cases, the disclosed embodiments are unable to identify any vehicles that are empty that can also reasonably transport the first user (e.g. less than a threshold distance or travel time from the first user's location). Thus, these embodiments display an indication to the first user that they will need to wait for an available vehicle. The embodiments then monitor available vehicles until one is available that can transport the first user.

In some embodiments, a duration of a planned trip and/or distance covered is considered when determining compatibility of passengers and thus assigning a vehicle. For example, in some embodiments, the minimum threshold of compatibility is based on a distance or elapsed time / duration during which two passengers share a common vehicle. Thus, if a first trip is relatively short, the minimum threshold is lower than a predefined threshold, in some embodiments. If a second trip is relatively longer than the first trip, the minimum threshold is higher than the predefined threshold.

After operation 1040 completes, method 1000 moves to end operation 1090.

FIG. 11 illustrates a block diagram of an example machine 1100 upon which any one or more of the techniques (e.g., methodologies) discussed herein may perform. Machine (e.g., computer system) 1100 may include a hardware processor 1102 (e.g., a central processing unit (CPU), a graphics processing unit (GPU), a hardware processor core, or any combination thereof), a main memory 1104 and a static memory 1106, some or all of which may communicate with each other via an interlink 1108 (e.g., bus). In some embodiments, the example machine 1100 is implemented by the MaaS server environment 604 and/or the central score management system 614.

Specific examples of main memory 1104 include Random Access Memory (RAM), and semiconductor memory devices, which may include, in some embodiments, storage locations in semiconductors such as registers. Specific examples of static memory 1106 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

The machine 1100 may further include a display device 1110, an input device 1112 (e.g., a keyboard), and a user interface (UI) navigation device 1114 (e.g., a mouse). In an example, the display device 1110, input device 1112 and UI navigation device 1114 may be a touch screen display. The machine 1100 may additionally include a mass storage device 1116 (e.g., drive unit), a signal generation device 1118 (e.g., a speaker), a network interface device 1120, and one or more sensors 1121, such as a global positioning system (GPS) sensor, compass, accelerometer, or other sensor. The machine 1100 may include an output controller 1128, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.). In some embodiments the hardware processor 1102 and/or instructions 1124 may comprise processing circuitry and/or transceiver circuitry.

The mass storage device 1116 may include a machine readable medium 1122 on which is stored one or more sets of data structures or instructions 1124 (e.g., software) embodying or utilized by any one or more of the techniques or functions described herein. The instructions 1124 may also reside, completely or at least partially, within the main memory 1104, within static memory 1106, or within the hardware processor 1102 during execution thereof by the machine 1100. In an example, one or any combination of the hardware processor 1102, the main memory 1104, the static memory 1106, or the mass storage device 1116 may constitute machine readable media.

Specific examples of machine readable media may include: non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine readable medium 1122 is illustrated as a single medium, the term "machine readable medium" may include a single medium or multiple media (e.g., a centralized or distributed database, and/or associated caches and servers) configured to store the one or more instructions 1124.

An apparatus of the machine 1100 may be one or more of a hardware processor 1102 (e.g., a central processing unit (CPU), a graphics processing unit (GPU), a hardware processor core, or any combination thereof), a main memory 1104 and a static memory 1106, sensors 1121, network interface device 1120, antennas 1160, a display device 1110, an input device 1112, a UI navigation device 1114, a mass storage device 1116, instructions 1124, a signal generation device 1118, and an output controller 1128. The apparatus may be configured to perform one or more of the methods and/or operations disclosed herein. The apparatus may be intended as a component of the machine 1100 to perform one or more of the methods and/or operations disclosed herein, and/or to perform a portion of one or more of the methods and/or operations disclosed herein. In some embodiments, the apparatus may include a pin or other means to receive power. In some embodiments, the apparatus may include power conditioning hardware.

The term "machine readable medium" may include any medium that is capable of storing, encoding, or carrying instructions for execution by the machine 1100 and that cause the machine 1100 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine readable media. In some examples, machine readable media may include machine readable media that is not a transitory propagating signal.

The instructions 1124 may further be transmitted or received over a communications network 1126 using a transmission medium via the network interface device 1120 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®} ), IEEE 802.15.4 family of standards, a Long Term Evolution (LTE) family of standards, a Universal Mobile Telecommunications System (UMTS) family of standards, peer-to-peer (P2P) networks, satellite communications, among others.

In an example, the network interface device 1120 may include one or more physical jacks (e.g., Ethernet, coaxial, or phone jacks) or one or more antennas to connect to the communications network 1126. In an example, the network interface device 1120 may include one or more antennas 1160 to wirelessly communicate using at least one of single-input multiple-output (SIMO), multiple-input multiple-output (MIMO), or multiple-input single-output (MISO) techniques. In some examples, the network interface device 1120 may wirelessly communicate using Multiple User MIMO techniques. The term "transmission medium" shall be taken to include any intangible medium that is capable of storing, encoding or carrying instructions for execution by the machine 1100, and includes digital or analog communications signals or other intangible medium to facilitate communication of such software.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Some embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; flash memory, etc.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Example 1 is a method performed by hardware processing circuitry of a mobility as a service (MaaS), server environment, comprising: obtaining rideshare information related to a first user, the information including a plurality of states; determining, for each possible state value of a plurality of states, a probability that the state has the possible state value, each of the plurality of states indicating feedback provided on a first user by other users; identifying, for each of the plurality of states, which of the state values of the state has a largest probability; determining, based on the identified largest probability state values, a corresponding second plurality of probabilities that state values of a second plurality of states of a second user match corresponding state values of the first plurality of states, the second plurality of states indicating feedback of a second user on other users; determining a first compatibility measurement between the first user and the second user based on the second plurality of probabilities; and assigning a common vehicle to the first user and the second user based on the first compatibility.

In Example 2, the subject matter of Example 1 optionally includes wherein the hardware processing circuitry is included in a mobility as a service (MaaS) server environment.

In Example 3, the subject matter of any one or more of Examples 1-2 optionally include determining a passenger preference score of the second user, wherein the first compatibility measurement is based on the passenger preference score.

In Example 4, the subject matter of any one or more of Examples 2-3 optionally include determining a percentage of feedback from the second user indicating a positive preference to ride with another passenger again, wherein the first compatibility measurement is based on the percentage.

In Example 5, the subject matter of any one or more of Examples 1-4 optionally include determining, based on the largest probability state values, a corresponding third plurality of probabilities that state values of the plurality of states of a third user are equivalent to that of the first user; and determining a second compatibility between the first user and the third user based on the third plurality of probabilities, wherein the assigning of the common vehicle to the first user and the second user is based on a relation of the first compatibility and the second compatibility.

In Example 6, the subject matter of any one or more of Examples 1-5 optionally include determining a product of the second plurality of probabilities, wherein the first compatibility measurement is based on the product.

In Example 7, the subject matter of any one or more of Examples 1-6 optionally include determining one or more of the largest probability state values of the first user based on input from a second user.

In Example 8, the subject matter of any one or more of Examples 4-7 optionally include obtaining a plurality of inputs from a plurality of users, each of the plurality of inputs selecting a state value of one of the plurality of states of the first user, determining individual probabilities that the first user has each individual state value of the plurality of states based on the inputs, wherein the determining of the largest probability state values of each of the plurality of states is based on the determined individual probabilities.

In Example 9, the subject matter of any one or more of Examples 1-8 optionally include identifying one or more of the largest probability state values based on sensor data collected from an in-vehicle sensor.

In Example 10, the subject matter of Example 9 optionally includes selecting, by an in-vehicle autonomous agent, and based on the sensor data collected from the in-vehicle sensor, one of two values for one or more of an emotional valence or an emotional arousal of the first user, wherein one of the states indicates the selected value for emotional valence or emotional arousal of the first user.

In Example 11, the subject matter of Example 10 optionally includes receiving input from a user interface indicating one of three or more values for an emotional state; and mapping the one value to one of the two values for the emotional valence or the emotional arousal.

In Example 12, the subject matter of any one or more of Examples 1-11 optionally include searching a block list of the second user; determining, based on the search, whether the first user is on the block list, wherein the compatibility is based on the determining.

In Example 13, the subject matter of any one or more of Examples 1-12 optionally include wherein the assigning is further based on an elapsed time during which the first user and the second user are assigned to the common vehicle or a distance covered while the first user and the second user are assigned to the common vehicle.

In Example 14, the subject matter of any one or more of Examples 1-13 optionally include wherein the assigning is further based on a number of vehicles compatible with a first route of the first user.

In Example 15, the subject matter of any one or more of Examples 1-14 optionally include determining an additional largest probability state value of the first user, the additional largest probability state value of a non-binary state, wherein the first compatibility is based on the additional largest probability state value and a probability that a value of the non-binary state of the second user is equivalent to the additional largest probability state value of the first user.

In Example 16, the subject matter of Example 15 optionally includes determining the additional largest probability state value of the first user based on input from a third user.

In Example 17, the subject matter of any one or more of Examples 1-16 optionally include receiving, from the first user, vehicle preference information, wherein the assigning of the common vehicle to the first user is based on the vehicle preference information.

In Example 18, the subject matter of any one or more of Examples 14-17 optionally include receiving, from the first user, input defining one or more characteristics of the user, the characteristics including an amount of luggage with the user or a type of equipment accompanying the user; identifying a set of vehicles able to accommodate a user having the defined one or more characteristics, wherein the assigning of the common vehicle to the first user comprises selecting the common vehicle from the identified set of vehicles.

Example 19 is a system, comprising: hardware processing circuitry; one or more hardware memories storing instructions that when executed configure the hardware processing circuitry to perform operations comprising: obtaining rideshare information related to a first user, the information including a plurality of states; determining, for each possible state value of a plurality of states, a probability that the state has the possible state value, each of the plurality of states indicating feedback provided on a first user by other users; identifying, for each of the plurality of states, which of the state values of the state has a largest probability; determining, based on the identified largest probability state values, a corresponding second plurality of probabilities that state values of a second plurality of states of a second user match corresponding state values of the first plurality of states, the second plurality of states indicating feedback of a second user on other users; determining a first compatibility measurement between the first user and the second user based on the second plurality of probabilities; and assigning a common vehicle to the first user and the second user based on the first compatibility.

In Example 20, the subject matter of Example 19 optionally includes wherein the hardware processing circuitry is included in a mobility as a service (MaaS) server environment.

In Example 21, the subject matter of any one or more of Examples 19-20 optionally include the operations further comprising determining a passenger preference score of the second user, wherein the first compatibility measurement is based on the passenger preference score.

In Example 22, the subject matter of Example 21 optionally includes the operations further comprising determining a percentage of feedback from the second user indicating a positive preference to ride with another passenger again, wherein the first compatibility measurement is based on the percentage.

In Example 23, the subject matter of any one or more of Examples 19-22 optionally include the operations further comprising: determining, based on the largest probability state values, a corresponding third plurality of probabilities that state values of the plurality of states of a third user are equivalent to that of the first user; and determining a second compatibility between the first user and the third user based on the third plurality of probabilities, wherein the assigning of the common vehicle to the first user and the second user is based on a relation of the first compatibility and the second compatibility.

In Example 24, the subject matter of any one or more of Examples 19-23 optionally include the operations further comprising determining a product of the second plurality of probabilities, wherein the first compatibility measurement is based on the product.

In Example 25, the subject matter of any one or more of Examples 19-24 optionally include the operations further comprising determining one or more of the largest probability state values of the first user based on input from a second user.

In Example 26, the subject matter of any one or more of Examples 19-25 optionally include the operations further comprising obtaining a plurality of inputs from a plurality of users, each of the plurality of inputs selecting a state value of one of the plurality of states of the first user, determining individual probabilities that the first user has each individual state value of the plurality of states based on the inputs, wherein the determining of the largest probability state values of each of the plurality of states is based on the determined individual probabilities.

In Example 27, the subject matter of any one or more of Examples 19-26 optionally include the operations further comprising identifying one or more of the largest probability state values based on sensor data collected from an in-vehicle sensor.

In Example 28, the subject matter of Example 27 optionally includes the operations further comprising selecting, by an in-vehicle autonomous agent, and based on the sensor data collected from the in-vehicle sensor, one of two values for one or more of an emotional valence or an emotional arousal of the first user, wherein one of the states indicates the selected value for emotional valence or emotional arousal of the first user.

In Example 29, the subject matter of Example 28 optionally includes the operations further comprising receiving input from a user interface indicating one of three or more values for an emotional state; and mapping the one value to one of the two values for the emotional valence or the emotional arousal.

In Example 30, the subject matter of any one or more of Examples 19-29 optionally include the operations further comprising searching a block list of the second user; determining, based on the search, whether the first user is on the block list, wherein the compatibility is based on the determining.

In Example 31, the subject matter of any one or more of Examples 19-30 optionally include wherein the assigning is further based on an elapsed time during which the first user and the second user are assigned to the common vehicle or a distance covered while the first user and the second user are assigned to the common vehicle.

In Example 32, the subject matter of any one or more of Examples 19-31 optionally include wherein the assigning is further based on a number of vehicles compatible with a first route of the first user.

In Example 33, the subject matter of any one or more of Examples 19-32 optionally include the operations further comprising determining an additional largest probability state value of the first user, the additional largest probability state value of a non-binary state, wherein the first compatibility is based on the additional largest probability state value and a probability that a value of the non-binary state of the second user is equivalent to the additional largest probability state value of the first user.

In Example 34, the subject matter of Example 33 optionally includes the operations further comprising determining the additional largest probability state value of the first user based on input from a third user.

In Example 35, the subject matter of any one or more of Examples 19-34 optionally include the operations further comprising receiving, from the first user, vehicle preference information, wherein the assigning of the common vehicle to the first user is based on the vehicle preference information.

In Example 36, the subject matter of Example 35 optionally includes the operations further comprising receiving, from the first user, input defining one or more characteristics of the user, the characteristics including an amount of luggage with the user or a type of equipment accompanying the user; identifying a set of vehicles able to accommodate a user having the defined one or more characteristics, wherein the assigning of the common vehicle to the first user comprises selecting the common vehicle from the identified set of vehicles.

Example 37 is at least one non-transitory computer readable storage medium comprising instructions that when executed configure hardware processing circuitry to perform operations comprising: obtaining rideshare information related to a first user, the information including a plurality of states; determining, for each possible state value of a plurality of states, a probability that the state has the possible state value, each of the plurality of states indicating feedback provided on a first user by other users; identifying, for each of the plurality of states, which of the state values of the state has a largest probability; determining, based on the identified largest probability state values, a corresponding second plurality of probabilities that state values of a second plurality of states of a second user match corresponding state values of the first plurality of states, the second plurality of states indicating feedback of a second user on other users; determining a first compatibility measurement between the first user and the second user based on the second plurality of probabilities; and assigning a common vehicle to the first user and the second user based on the first compatibility.

In Example 38, the subject matter of Example 37 optionally includes wherein the hardware processing circuitry is included in a mobility as a service (MaaS) server environment.

In Example 39, the subject matter of any one or more of Examples 37-38 optionally include the operations further comprising determining a passenger preference score of the second user, wherein the first compatibility measurement is based on the passenger preference score.

In Example 40, the subject matter of Example 39 optionally includes the operations further comprising determining a percentage of feedback from the second user indicating a positive preference to ride with another passenger again, wherein the first compatibility measurement is based on the percentage.

In Example 41, the subject matter of any one or more of Examples 37-40 optionally include the operations further comprising: obtaining rideshare information related to a first user, the information including a plurality of states; determining, based on the largest probability state values, a corresponding third plurality of probabilities that state values of the plurality of states of a third user are equivalent to that of the first user; and determining a second compatibility between the first user and the third user based on the third plurality of probabilities, wherein the assigning of the common vehicle to the first user and the second user is based on a relation of the first compatibility and the second compatibility.

In Example 42, the subject matter of any one or more of Examples 37-41 optionally include the operations further comprising determining a product of the second plurality of probabilities, wherein the first compatibility measurement is based on the product.

In Example 43, the subject matter of any one or more of Examples 37-42 optionally include the operations further comprising determining one or more of the largest probability state values of the first user based on input from a second user.

In Example 44, the subject matter of any one or more of Examples 40-43 optionally include the operations further comprising obtaining a plurality of inputs from a plurality of users, each of the plurality of inputs selecting a state value of one of the plurality of states of the first user, determining individual probabilities that the first user has each individual state value of the plurality of states based on the inputs, wherein the determining of the largest probability state values of each of the plurality of states is based on the determined individual probabilities.

In Example 45, the subject matter of any one or more of Examples 37-44 optionally include the operations further comprising identifying one or more of the largest probability state values based on sensor data collected from an in-vehicle sensor.

In Example 46, the subject matter of Example 45 optionally includes the operations further comprising selecting, by an in-vehicle autonomous agent, and based on the sensor data collected from the in-vehicle sensor, one of two values for one or more of an emotional valence or an emotional arousal of the first user, wherein one of the states indicates the selected value for emotional valence or emotional arousal of the first user.

In Example 47, the subject matter of Example 46 optionally includes the operations further comprising receiving input from a user interface indicating one of three or more values for an emotional state; and mapping the one value to one of the two values for the emotional valence or the emotional arousal.

In Example 48, the subject matter of any one or more of Examples 37-47 optionally include the operations further comprising searching a block list of the second user; determining, based on the search, whether the first user is on the block list, wherein the compatibility is based on the determining.

In Example 49, the subject matter of any one or more of Examples 37-48 optionally include wherein the assigning is further based on an elapsed time during which the first user and the second user are assigned to the common vehicle or a distance covered while the first user and the second user are assigned to the common vehicle.

In Example 50, the subject matter of any one or more of Examples 37-49 optionally include wherein the assigning is further based on a number of vehicles compatible with a first route of the first user.

In Example 51, the subject matter of any one or more of Examples 37-50 optionally include the operations further comprising determining an additional largest probability state value of the first user, the additional largest probability state value of a non-binary state, wherein the first compatibility is based on the additional largest probability state value and a probability that a value of the non-binary state of the second user is equivalent to the additional largest probability state value of the first user.

In Example 52, the subject matter of Example 51 optionally includes the operations further comprising determining the additional largest probability state value of the first user based on input from a third user.

In Example 53, the subject matter of any one or more of Examples 37-52 optionally include the operations further comprising receiving, from the first user, vehicle preference information, wherein the assigning of the common vehicle to the first user is based on the vehicle preference information.

In Example 54, the subject matter of Example 53 optionally includes the operations further comprising receiving, from the first user, input defining one or more characteristics of the user, the characteristics including an amount of luggage with the user or a type of equipment accompanying the user; identifying a set of vehicles able to accommodate a user having the defined one or more characteristics, wherein the assigning of the common vehicle to the first user comprises selecting the common vehicle from the identified set of vehicles.

Example 55 is an apparatus, comprising: means for obtaining rideshare information related to a first user, the information including a plurality of states; means for determining, for each possible state value of a plurality of states, a probability that the state has the possible state value, each of the plurality of states indicating feedback provided on a first user by other users; means for identifying, for each of the plurality of states, which of the state values of the state has a largest probability; means for determining, based on the identified largest probability state values, a corresponding second plurality of probabilities that state values of a second plurality of states of a second user match corresponding state values of the first plurality of states, the second plurality of states indicating feedback of a second user on other users; means for determining a first compatibility measurement between the first user and the second user based on the second plurality of probabilities; and means for assigning a common vehicle to the first user and the second user based on the first compatibility.

In Example 56, the subject matter of Example 55 optionally includes means for determining a passenger preference score of the second user, wherein the means for determining the first compatibility measurement is configured to base the first compatibility measurement on the passenger preference score.

In Example 57, the subject matter of Example 56 optionally includes means for determining a percentage of feedback from the second user indicating a positive preference to ride with another passenger again, wherein the means for determining the first compatibility measurement is configured to base the first compatibility measurement on the percentage.

In Example 58, the subject matter of any one or more of Examples 55-57 optionally include means for determining, based on the largest probability state values, a corresponding third plurality of probabilities that state values of the plurality of states of a third user are equivalent to that of the first user; and means for determining a second compatibility between the first user and the third user based on the third plurality of probabilities, wherein the means for assigning of the common vehicle to the first user and the second user is configured to base the assignment on a relation of the first compatibility and the second compatibility.

In Example 59, the subject matter of any one or more of Examples 55-58 optionally include means for determining a product of the second plurality of probabilities, wherein the means for determining the first compatibility measurement is configured to determine the first compatibility measurement based on the product.

In Example 60, the subject matter of any one or more of Examples 55-59 optionally include means for determining one or more of the largest probability state values of the first user based on input from a second user.

In Example 61, the subject matter of Example 60 optionally includes means for obtaining a plurality of inputs from a plurality of users, each of the plurality of inputs selecting a state value of one of the plurality of states of the first user, means for determining individual probabilities that the first user has each individual state value of the plurality of states based on the inputs, wherein the means for determining of the largest probability state values of each of the plurality of states configured to base the determining of the largest probability state values on the determined individual probabilities.

In Example 62, the subject matter of any one or more of Examples 55-61 optionally include means for identifying one or more of the largest probability state values based on sensor data collected from an in-vehicle sensor.

In Example 63, the subject matter of Example 62 optionally includes means for selecting, by an in-vehicle autonomous agent, and based on the sensor data collected from the in-vehicle sensor, one of two values for one or more of an emotional valence or an emotional arousal of the first user, wherein one of the states indicates the selected value for emotional valence or emotional arousal of the first user.

In Example 64, the subject matter of Example 63 optionally includes means for receiving input from a user interface indicating one of three or more values for an emotional state; and means for mapping the one value to one of the two values for the emotional valence or the emotional arousal.

In Example 65, the subject matter of any one or more of Examples 55-64 optionally include means for searching a block list of the second user; and means for determining, based on the search, whether the first user is on the block list, wherein the compatibility is based on the determining.

In Example 66, the subject matter of any one or more of Examples 55-65 optionally include wherein the means for assigning is configured to further base the assignment on an elapsed time during which the first user and the second user are assigned to the common vehicle or a distance covered while the first user and the second user are assigned to the common vehicle.

In Example 67, the subject matter of any one or more of Examples 55-66 optionally include wherein the means for assigning is configured to further base the assignment on a number of vehicles compatible with a first route of the first user.

In Example 68, the subject matter of any one or more of Examples 55-67 optionally include means for determining an additional largest probability state value of the first user, the additional largest probability state value of a non-binary state, wherein the means for determining the first compatibility is configured to base the first compatibility on the additional largest probability state value and a probability that a value of the non-binary state of the second user is equivalent to the additional largest probability state value of the first user.

In Example 69, the subject matter of Example 68 optionally includes means for determining the additional largest probability state value of the first user based on input from a third user.

In Example 70, the subject matter of any one or more of Examples 55-69 optionally include means for receiving, from the first user, vehicle preference information, wherein the means for assigning of the common vehicle to the first user is configured to base the assignment on the vehicle preference information.

In Example 71, the subject matter of Example 70 optionally includes means for receiving, from the first user, input defining one or more characteristics of the user, the characteristics including an amount of luggage with the user or a type of equipment accompanying the user; means for identifying a set of vehicles able to accommodate a user having the defined one or more characteristics, wherein the assigning of the common vehicle to the first user comprises selecting the common vehicle from the identified set of vehicles.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; flash memory, etc.

## Claims

1. A system, comprising:
hardware processing circuitry; and
one or more hardware memories storing instructions that when executed configure the hardware processing circuitry to perform operations comprising:
obtaining rideshare information related to a first user, the information including a plurality of states;
determining, for each possible state value of a plurality of states, a probability that the state has the possible state value, each of the plurality of states indicating feedback provided on a first user by other users;
identifying, for each of the plurality of states, which of the state values of the state has a largest probability;
determining, based on the identified largest probability state values, a corresponding second plurality of probabilities that state values of a second plurality of states of a second user match corresponding state values of the first plurality of states, the second plurality of states indicating feedback of a second user on other users;
determining a first compatibility measurement between the first user and the second user based on the second plurality of probabilities; and
assigning a common vehicle to the first user and the second user based on the first compatibility.

2. The system of claim 1, further comprising determining a passenger preference score of the second user, wherein the first compatibility measurement is based on the passenger preference score.

3. The system of claim 2, further comprising determining a percentage of feedback from the second user indicating a positive preference to ride again with another passenger, wherein the first compatibility measurement is based on the percentage.

4. The system of one of the previous claims, further comprising:
determining, based on the largest probability state values, a corresponding third plurality of probabilities that state values of the plurality of states of a third user are equivalent to that of the first user; and
determining a second compatibility between the first user and the third user based on the third plurality of probabilities, wherein the assigning of the common vehicle to the first user and the second user is based on a relation of the first compatibility and the second compatibility.

5. The system of one of the previous claims, further comprising determining a product of the second plurality of probabilities, wherein the first compatibility measurement is based on the product.

6. The system of one of the previous claims, further comprising determining one or more of the largest probability state values of the first user based on input from a second user.

7. The system of one of the previous claims, further comprising obtaining a plurality of inputs from a plurality of users, each of the plurality of inputs selecting a state value of one of the plurality of states of the first user, determining individual probabilities that the first user has each individual state value of the plurality of states based on the inputs, wherein the determining of the largest probability state values of each of the plurality of states is based on the determined individual probabilities.

8. The system of one of the previous claims, further comprising:
identifying one or more of the largest probability state values based on sensor data collected from an in-vehicle sensor; and
selecting, by an in-vehicle autonomous agent, and based on the sensor data collected from the in-vehicle sensor, one of two values for one or more of an emotional valence or an emotional arousal of the first user, wherein one of the states indicates the selected value for emotional valence or emotional arousal of the first user.

9. The system of claim 8, further comprising receiving input from a user interface indicating one of three or more values for an emotional state; and mapping the one value to one of the two values for the emotional valence or the emotional arousal.

10. The system of one of the previous claims, wherein the assigning is further based on an elapsed time during which the first user and the second user are assigned to the common vehicle or a distance covered while the first user and the second user are assigned to the common vehicle.

11. The system of one of the previous claims, further comprising determining an additional largest probability state value of the first user, the additional largest probability state value of a non-binary state, wherein the first compatibility is based on the additional largest probability state value and a probability that a value of the non-binary state of the second user is equivalent to the additional largest probability state value of the first user.

12. The system of claim 11, further comprising determining the additional largest probability state value of the first user based on input from a third user.

13. The system of one of the previous claims, further comprising:
obtaining, from the first user, vehicle preference information, wherein the assigning of the common vehicle to the first user is based on the vehicle preference information;
obtaining, from the first user, input defining one or more characteristics of the user, the characteristics including an amount of luggage with the user or a type of equipment accompanying the user; and
identifying a set of vehicles able to accommodate a user having the defined one or more characteristics, wherein the assigning of the common vehicle to the first user comprises selecting the common vehicle from the identified set of vehicles.

14. At least one non-transitory computer readable storage medium comprising instructions that, when executed, configure at least one processor to perform operations comprising:
determining, for each possible state value of a plurality of states, a probability that the state has the possible state value, each of the plurality of states indicating feedback provided on a first user by other users;
identifying, for each of the plurality of states, which of the state's values has a largest probability;
determining, based on the identified largest probability state values, a corresponding second plurality of probabilities that state values of a second plurality of states of a second user match corresponding state values of the first plurality of states, the second plurality of states indicating feedback of a second user on other users;
determining a first compatibility measurement between the first user and the second user based on the second plurality of probabilities; and
assigning a common vehicle to the first user and the second user based on the first compatibility.

15. An apparatus, comprising:
means for determining, for each possible state value of a plurality of states, a probability that the state has the possible state value, each of the plurality of states indicating feedback provided on a first user by other users;
means for identifying, for each of the plurality of states, which of the state's values has a largest probability;
means for determining, based on the identified largest probability state values, a corresponding second plurality of probabilities that state values of a second plurality of states of a second user match corresponding state values of the first plurality of states, the second plurality of states indicating feedback of a second user on other users;
means for determining a first compatibility measurement between the first user and the second user based on the second plurality of probabilities; and
means for assigning a common vehicle to the first user and the second user based on the first compatibility.
